# EUROPEAN PATENT SPECIFICATION

(11) **EP 2 229 322 B1**
(45) Date of publication and mention of the grant of the patent: **09.09.2015**
(21) Application number: 09701317.1
(22) Date of filing: 02.01.2009
(51) Int. Cl.: B64D 29/06

(54) **A METHOD AND COMPONENT FOR DETERMINING LOAD ON A LATCH ASSEMBLY**
VERFAHREN UND KOMPONENTE ZUR BESTIMMUNG DER LAST AUF EINER VERRIEGELUNGSBAUGRUPPE
PROCÉDÉ ET COMPOSANT PERMETTANT DE DÉTERMINER LA CHARGE EXERCÉE SUR UN DISPOSITIF DE VERROUILLAGE

(30) Priority: 07.01.2008 US 6884
(43) Date of publication of application: 22.09.2010
(73) Proprietor: Rohr, Inc., Chula Vista, CA 91910-2098 (US)
(72) Inventor: SHETZER, Daniel, Jeremy, San Diego, CA 92109 (US)
(74) Representative: Hall, Matthew Benjamin
(86) International application number: PCT/US2009/000006
(87) International publication number: WO 2009/088961

(56) References cited:
- EP-A2- 1 111 168
- EP-A2- 2 042 429
- WO-A1-2006/067442
- US-A- 5 011 200
- US-A1- 2006 061 108
- US-B1- 6 279 971
- US-B1- 6 279 971
- US-B2- 7 131 672
- US-B2- 7 131 672

## Description

### BACKGROUND OF THE INVENTION

### 1. Field of the Invention

The present invention relates to a sensor for detecting when a latch assembly for securing an aircraft engine cowl door is properly secured.

### 2. Description of Related Art

A variety of devices and methods are known in the art for detecting whether an aircraft latch is in a secured state. Of such devices, many are directed to determining whether an aircraft latch for securing an engine cowl door is in a secured state by using simple visual inspection conducted by aircraft maintenance personnel. Failure to secure the cowl doors after opening can lead to malfunction of the cowl doors during take-off or flight. In some circumstances, the cowl doors can be liberated from the aircraft completely. Fortunately, the loss of an engine cowl door is not generally a serious threat to an aircraft. However, it is nonetheless advantageous to reduce the number of cowl door incidents. Typically, the onus is on ground personnel to verify that all engine cowl doors are secured before an aircraft pulls away from its gate. It is believed that the prevailing cause of engine cowl door incidents is failure of ground crew to securely latch engine cowl doors prior to departure.

Efforts have been made to assist ground crews in verifying engine cowl doors are secured. Commonly, a rather large and prominently colored access door is provided over the latch assembly such that the access door cannot be closed unless the latch assembly is engaged. Such an access door is easily seen when hanging down in the open position but it is a costly and heavy solution on an aircraft.

U.S. Patent No. 6,334,588 to Porte describes a system for securing fan cowls in which a maintenance crew can visually detect an unsecured fan cowl because edges of unsecured fan cowls protrude enough to allow for visual detection. Another visual technique for detecting unsecured cowls is described in U.S. Patent No. 5,518,206 to Arnold et al., which describes an apparatus that extends a flag visible to ground crew when an engine cowl is unsecured.

Such conventional methods and systems generally have been considered satisfactory for their intended purpose. However, while visual cues make it possible to verify that an engine cowl is securely latched, these techniques still rely on the ground crew to remember to check the latches. Improvements in this area, for example, to remove the "human element" from the process using electronics, have been slow due to the harsh conditions present in the engine nacelle environment. One attempt has been to use sensors to detect the state of a cowl latch, as in U.S. Patent No. 7,131,672 to Pratt et al. (Pratt et al. patent). However, the sensors and wiring systems described in the Pratt et al. patent are prone to failure in the harsh nacelle environment. Further, wiring adds weight, complexity and components that may fail, which are undesirable in aviation applications.

Other efforts have been made in creating systems to inform operators whether an engine cowl is secured or not by using sensors. U.S. Patent Application No. 2006/0038410 to Pratt et al. describes a latch having sensors to assist controlling an electrical motor, which operates to open and close a latch for a fan cowl. The sensors can also inform a controller as to the status of the latch. U.S. Patent No. 6,279,971 to Dessenberger et al. describes a latch with a sensor. The latch includes a hook pivotally connected to a handle for engagement with a keeper. The sensor has a sensing end and a blocking end so that when the sensor is in the unblocked position, a trigger lock is allowed to engage the hook and close the handle.

Despite these advances, there still remains a continued need in the art for a latch sensor that is more sensitive, reliable, able to be retrofit, and provides information to a remote area such as the cockpit. There also remains a need in the art for a system of latch detection that is inexpensive and easy to make, including retrofitting existing latches without substantially altering the latch itself.

Moreover, latch assemblies are typically set to secure the cowl doors in a tight fashion. In other words, the latch assemblies serve to create a force that retains the cowl doors in the proper position to prevent rattling and chafing during flight. A typical latch keeper is provided with a star wheel or like adjustment mechanism to vary the position of the keeper and, thereby, the load on the latch assembly. Then a force gauge is used to determine the force required to close the latch, which is an indirect measurement of the load on the latch assembly. Typically, the latch assembly adjustment is only used initially when building and attaching the engine nacelle to the airplane. Additional information relevant to the present invention may be found in WO 2006/067442, EP 2042429 and EP 1111168.

Based on the assumption that the force required to close the latch is the load on the latch assembly (e.g., the load between the latch and keeper), the keeper is adjusted to set the load. Since such measurements and adjustments can be cumbersome, subsequent regular readjustment is usually not made again. As a result of normal component wear and usage, the load upon the latch assembly changes. The load can become too small resulting in chafing, or too tight resulting in undue component stress and fatigue. In either case, improper pre-loading can cause premature wear and failure of not only the latch assembly but other components as well.

In view of the above, a need exists for an improved remotely interrogated latch assembly, as well as a system and method that allows the aircraft mechanic to accurately pre-load the latch assembly. Additionally, a system and method suitable for subsequent maintenance and adjustments would allow maintaining latch assemblies at desired loading levels.

### SUMMARY OF THE INVENTION

The purpose and advantages of the present invention will be set forth in and become apparent from the description that follows. Additional advantages of the invention will be realized and attained by the methods and systems particularly pointed out in the written description and claims hereof, as well as from the appended drawings.

One advantage of the subject technology is that it provides a sensor to effectively notify ground mechanics and cockpit crews that the cowl latch assemblies are closed while being able to withstand the harsh engine nacelle environment without reducing the aerodynamic profile or adding weight to the latch assembly. Further, the subject technology can be adapted as an upgrade for existing latch assemblies so that a direct measurement of load on the latch assembly may be made.

Another advantage of the subject technology is an ability to properly pre-load the latch assembly so that components are properly closed to prevent premature wear. Such pre-load measurements are easy to make, so that maintenance adjustments can be quickly made.

According to a first aspect, the present invention provides a cowl assembly for an engine nacelle comprising: a) a first and second cowl door mounted for movement between an open position and a closed position; b) a latch assembly for selectively retaining the cowl doors in the closed position, the latch assembly having a latch retained in a latch housing on the first cowl door to engage a keeper retained in a keeper housing on the second cowl door; c) a pin including an internal bore and associated with one of the keeper, the keeper housing, the latch and the latch housing, wherein the pin carries at least a portion of the load on the latch; d) a microcontroller and a sensor retained in the internal bore of the pin for determining a signal indicative of a load on the pin, wherein the signal is determinative of whether the cowl doors are in the open or closed position; and e) an antenna for receiving and transmitting the signal to a location remote from the sensor.

In a further embodiment, the sensor is a set of three spaced apart strain gauges and a cap encloses the internal bore.

The subject technology is also directed to a wireless latch detection system for determining when an engine cowl latch of an aircraft engine nacelle is secured. The wireless latch detection system includes a pin for generating a signal indicating a status of the latch. The pin has a body defining a bore, at least one strain gauge disposed within the bore, an antenna for transmitting the signal and a microcontroller operatively connected to a power source, at least one of said strain gauges, and the antenna. A transceiver is remotely located from the pin for processing the signal from the antenna. In one embodiment, the transceiver records and stores the signal. The wireless latch detection system may be selectively activated or inactivated such as when the aircraft engine is shut down, running, or in flight.

The subject technology is also directed to a method for determining when a latch assembly is open or securely closed, comprising the steps of: a) providing a pin in the latch assembly such that the pin bears a first load when the latch is secure and a second load when the latch is open; b) generating a signal indicative of the load on the pin; and c) wirelessly transmitting the signal to a location remote from the pin. In one embodiment, the signal is converted into status information regarding the open or secure state of the latch assembly. The pin may bear a third load during pre-load and, in turn, generate a pre-load signal to reduce wear. In one method, a latch is retained to the latch assembly by the pin.

In another embodiment, the subject technology is directed to a method for pre-loading a latch assembly comprising the steps of providing a pin in the latch assembly such that the pin bears a load when the latch is secure, using the pin to generate a signal indicative of the load and determining if the load is appropriate based on the signal. In a further embodiment, the method includes adjusting the load and rechecking the signal when the load is inappropriate. The load may be adjusted by positioning a keeper that engages a latch.

It is to be understood that both the foregoing general description and the following detailed description are exemplary and are intended to provide further explanation of the invention claimed.

### BRIEF DESCRIPTION OF THE DRAWINGS

The accompanying drawings, which are incorporated in and constitute part of this specification, are included to illustrate and provide a further understanding of the method and system of the invention. Together with the description, the drawings serve to explain the principles of the invention.
Fig. 1 is a perspective view of an aircraft showing the engine nacelle cowl doors in the closed position.
Fig. 2 is a perspective view of a mechanic and engine nacelle with open cowl doors.
Fig. 3 is a perspective view of closed and fastened cowl doors from the interior of an engine nacelle, showing latch assemblies in accordance with the subject technology.
Fig. 4 is a more detailed plan view of the latch assembly of Fig. 3 as seen from inside the engine nacelle.
Fig. 5A is a perspective view of the latch and keeper of the latch assembly of Fig. 3 in a closed position, showing the head of the pin.
Fig. 5B is a perspective view of the latch and keeper of the latch assembly of Fig. 3 in an open position, showing the head of the pin.
Fig. 6 is a perspective view of the hook and latch of the latch assembly of Fig. 3 in an assembled condition, showing the head of the pin pulled out.
Fig. 7 is a partial sectional perspective view of the pin of Figs 5 and 6 with the cap removed and inner components visible.
Fig. 8 is a longitudinal cross-sectional view of the pin, taken at line 8-8 of Fig. 6.
Fig. 9 is a perspective view of the latch assembly, showing transmission of the signal to the receiver and forwarded to airplane cockpit.
Fig. 10 is a perspective view of the latch assembly, showing transmission of the signal to a mechanic's transceiver.

### DETAILED DESCRIPTION OF THE PREFERRED EMBODIMENT

Reference will now be made in detail to the present preferred embodiments of the invention, examples of which are illustrated in the accompanying drawings. The method and corresponding steps of the invention will be described in conjunction with the detailed description of the system. The devices and methods presented herein may be used for detecting when a latch is (and is not) properly secured. The present invention is particularly suited for detecting when aircraft engine cowl doors are securely latched.

In brief overview, a wireless latch detection system (WLDS) uses strain gauges, a microcontroller and an antenna integrated in a latch pin to directly ascertain a load of a latch assembly. When a latch assembly such as on the cowl doors is properly closed, the latch assembly is loaded and the WLDS transmits an indication of the closed condition. Otherwise, the WLDS transmits an indication that the latch mechanism is unloaded, e.g., in the open position. Further, the strain gauges provide a direct reading of the load so that adjustments may be made to set the load at a proper value.

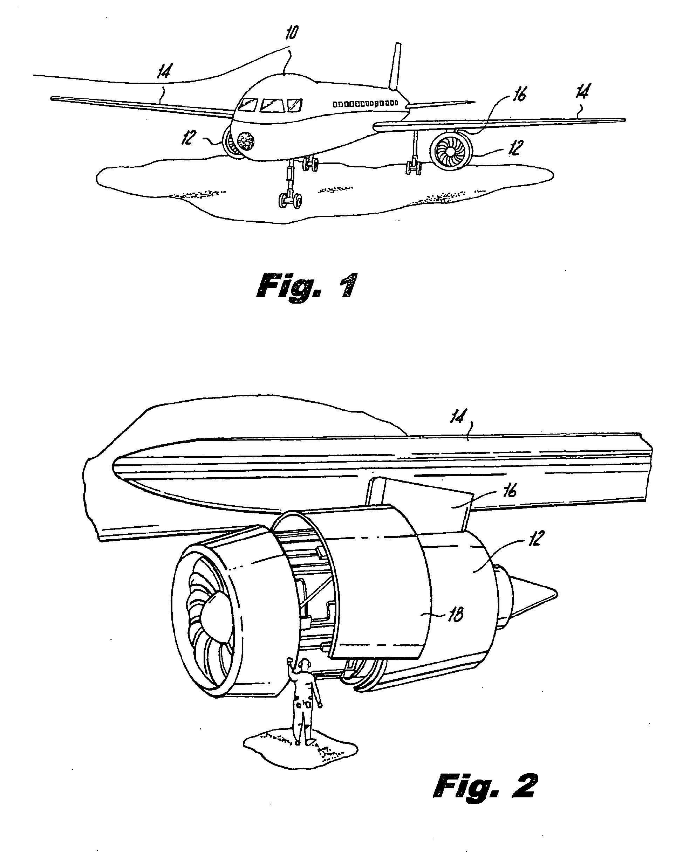

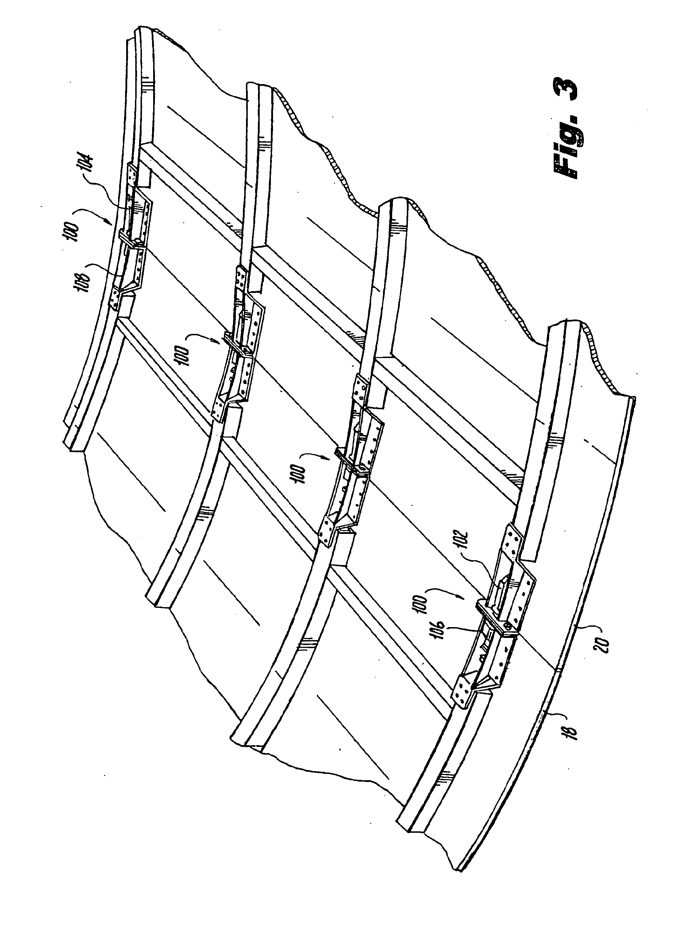

Referring to Figure 1, an aircraft 10 showing engine nacelles 12 is shown. The engine nacelles 12 are attached to a strut 16 under the aircraft wing 14. The engine nacelle 12 is shown being inspected by a mechanic in more detail in Figure 2. The engine nacelle 12 includes two cowl doors 18, 20 that open to allow access to components therein for service and maintenance. The cowl doors 18, 20 are hinged to open and are retained closed by latch assemblies 100 (see Fig. 3). It is within the subject disclosure to adapt the latch assemblies 100 to retain a single cowl door, however, the following description refers to an embodiment having four latch assemblies 100 that extend across and secure two cowl doors 18, 20.

Referring to Fig. 3, a perspective view of an interior of closed and fastened cowl doors 18, 20, showing the four latch assemblies 100 is shown. Four latch assemblies 100 are shown but it is appreciated that an alternative number may be used. When properly loaded, the latch assemblies 100 will effectively retain the cowl doors 18, 20 closed, so that rattling, chafing and premature wear do not occur. The closed cowl doors 18, 20 also provide an aerodynamically smooth surface for the engine nacelle 12, and protect components inside the cowl doors 18, 20 from the elements.

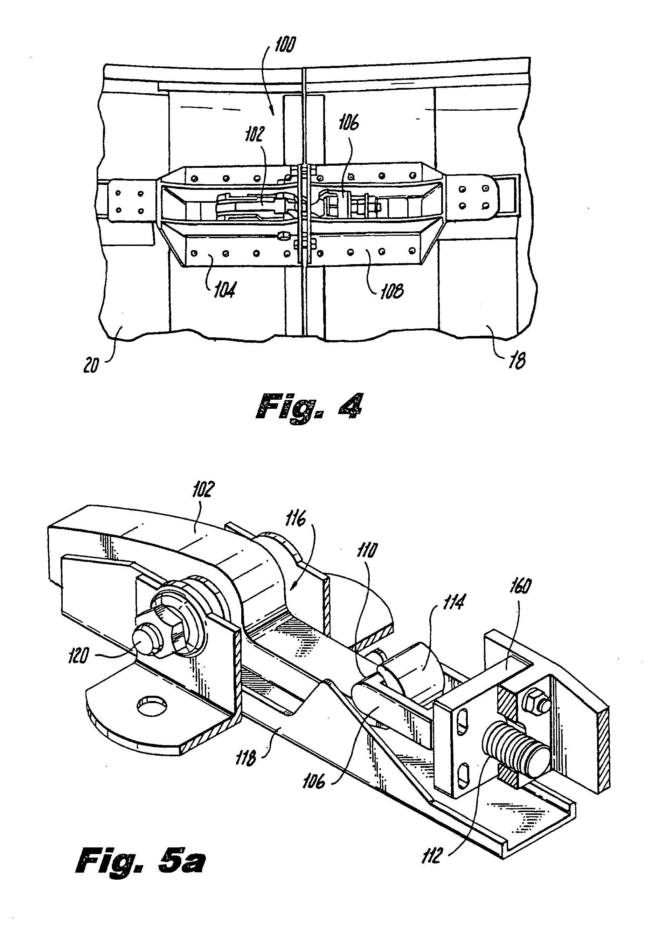

Referring now to Fig. 4, a plan view of a single latch assembly 100 of Fig. 3 is shown as seen from inside the engine nacelle 12. The latch assembly 100 includes a latch 102 held within a latch housing 104 that is secured to the cowl door 20. On the adjacent cowl door 18, a keeper 106 is secured within a keeper housing 108 for engaging the latch 102 to close the latch assembly 100. Each housing 104, 108 is permanently fixed to the respective cowl door 20, 18.

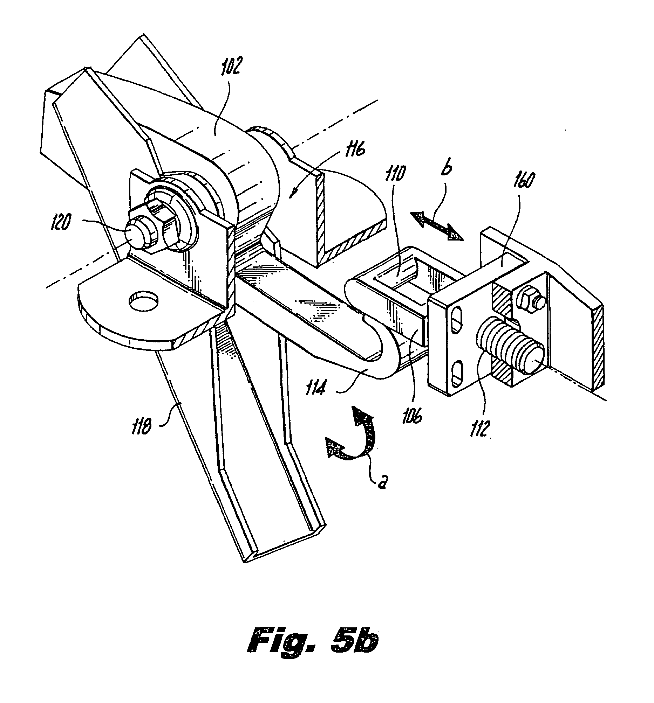

Figs. 5A and 5B show perspective views of a closed and open latch assembly 100, respectively, as would be seen from inside the engine nacelle 12. In the closed position, the latch 102 and keeper 106 are securely engaged whereas in the open position, the latch 102 and keeper 106 are disengaged. The keeper 104 has a grasp bar 110 fixed to the keeper housing 108 by a linkage such as a threaded bar 112. The threaded bar 112 is secured to the keeper housing 108 by a plate 160. A nut (not shown) may be used to lock the position of the threaded bar 112 with respect to the plate 160. As can be seen, the latch 102 has a hook 114 (shown in phantom dashed lines) connected by a linkage 116 to a handle 118. The linkage 116 allows the handle 118 to move between the closed latch position of Fig. 5A and the open latch position of Fig. 5B. As the handle 118 moves along arrow "a", the linkage 116 urges the latch 102 along arrow "b" into and out of engagement with the keeper 104. When the latch assembly 100 is closed, the handle 118 rests within a depression (not shown) formed in the cowl doors 18, 20 so that an aerodynamic profile is formed. To close the cowl doors 18, 20, the handle 118 is moved towards the hook 114 and, in turn, the hook 114 moves onto the grasp bar 110 of the keeper 106 and creates a retentive force. The retentive force pulls the cowl doors 18, 20 together. To open the cowl doors 18, 20, the handle 118 is moved away from the keeper 106 and, in turn, the latch 102 moves off the keeper 106. The handle 118 is usually painted red for extra visibility so that when moved away from the keeper 106, the handle 118 hangs down below the engine nacelle 12 to provide visual indication that the latch assembly 100 is open.

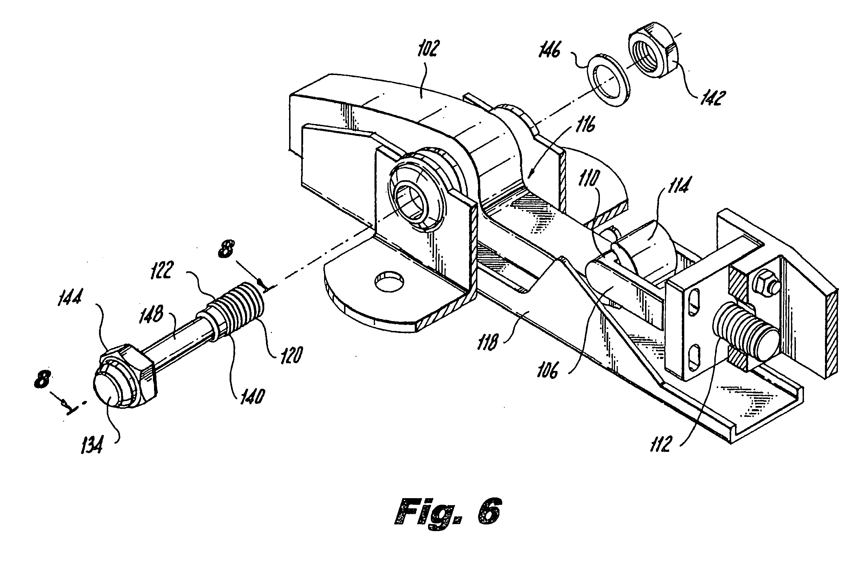

Referring to Figs. 5A, 5B and 6, the latch 102 is coupled to the latch housing 104 so that a pin 120 connected to the linkage 116 carries at least a portion of the load on the latch 102. Preferably, the pin 120 is configured and positioned so that the full load is directly carried by the pin 120. The position of the keeper 106 and grasp bar 110 with respect to the keeper housing 108 can be adjusted by rotating the threaded bar 112. By adjusting the position of the grasp bar 110 along arrow "b", the retentive force between the hook 114 and grasp bar 110 (e.g., the latch/ pin load) can be adjusted. In one embodiment, the latch housing 102 and keeper housing 108 are titanium and the body 122, the latch 102 and keeper 106 are aerospace steel. In another embodiment, one or more pins can be used to retain one or both housings 104, 108 to the cowl doors 18, 20.

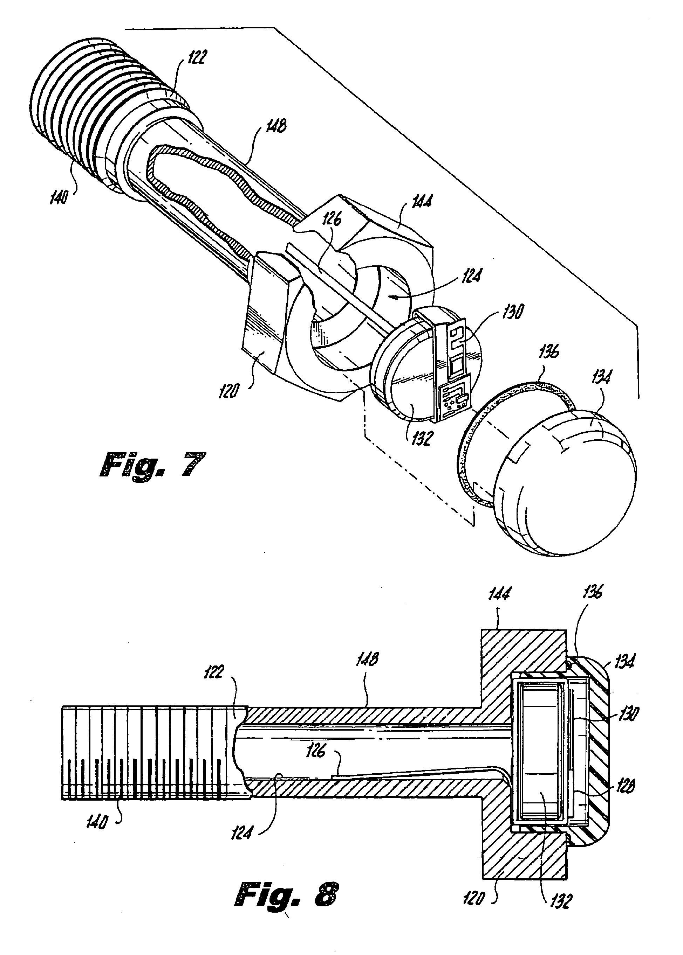

Referring to Figs. 7 and 8, the pin 120 includes components to generate a signal indicative of the load thereon. The pin 120 has a body 122 defining a bore 124. One or more strain gauges 126 to detect the pin load are bonded within the bore 124 such as taught in U.S. Patent No. 2,873,341, U.S. Patent No. 3,695,096 and U.S. Patent No. 3,365,689. The strain gauge 126 can detect the operational forces on the pin 120 and convert such strain to a load signal. The strain gauge 126 can be calibrated after installation and operation of the aircraft 10 to prevent inaccurate readings. In one embodiment, the pin 120 is fixed in place so that the orientation between the force lines of the load and strain gauge 126 is known. Any type of device that generates a signal indicative of strain can be used instead of a strain gauge 126. For example, a surface acoustic wave (SAW) device may be used to measure the surface strain on the relevant portion of the pin 120.

The strain gauge 126 provides a signal to a microcontroller 128 also housed within the internal bore 124. The microcontroller 128 can serve to provide signal processing as necessary, as well as control the operation of the pin 120. For example, the microcontroller 128 may turn off the pin 120 upon receipt of a signal indicating that the aircraft engine is running.

An antenna 130 for transmitting the signal is also in the internal bore 124 and connected to the microcontroller 128. In one embodiment, the antenna 130 is multiband or wideband, such as a fractal antenna commonly used in cellular telephone and microwave communication applications. In one embodiment, the signal is transmitted at a 2.4 GHz RF IEEE standard 802.15.4 modulation protocol. Alternatively, the pin 120 may be wired into the electronics of the airplane 10.

A battery 132 powers the pin components as needed. The battery 132 is preferably a small, reliable power cell located in the internal bore 124. One exemplary battery 132 is a high temperature lithium-ion battery with an expected life span of 7-10 years. It is recognized that any power source is acceptable such as a rechargeable battery with an internal power source. The internal power source may convert light or motion into energy to recharge the battery. A cap 134 and seal ring 136 enclose the bore 124 so the components are protected from the external environment. To allow access to change the battery 132, the cap 134 may thread into the body 122 or utilize a like arrangement. Alternatively, the battery 132 and other components are permanently and/or hermetically sealed in the pin 120. In one embodiment, the cap 134 is configured to have beam steering qualities (e.g., a radome) so that the broadcast zone has a desired shape that aims the signal toward a reception point.

Referring to Figs. 5-8, the pin 120 is set in place using conventional means such as threads 140 that couple to a nut 142 and a washer 146 on one end, and a bolt head 144 on the other end. The cap 134 may be screwed, press fit, glued and the like into the bolt head 144. Preferably, the body 122 also has a non-threaded portion 148 that carries the latch assembly load. The non-threaded portion 148 may be surrounded by narrower portions to help transmit the pin forces more effectively to the at least one strain gauge 126 mounted in the internal bore 124. Generally, the placement of the strain gauge 126 will be to locate the strain gauge 126 near where the pin 120 carries the load on the latch assembly 100. Thus, it is envisioned that configuration of the body 122 as well as the number and placement of the strain gauge 126 may vary greatly depending upon the particular application.

In another embodiment, the hardware for generating and transmitting a signal indicative of the strain on the latch assembly 100 is housed in another component. For example, the plate 160 that anchors the keeper 106 may have the strain gauge and other components mounted therein. Additionally, one or more of the components may be mounted on an exterior as design constraints like space and effectiveness demand. Similarly, the component may be integrated to a housing, a keeper, a latch and the like.

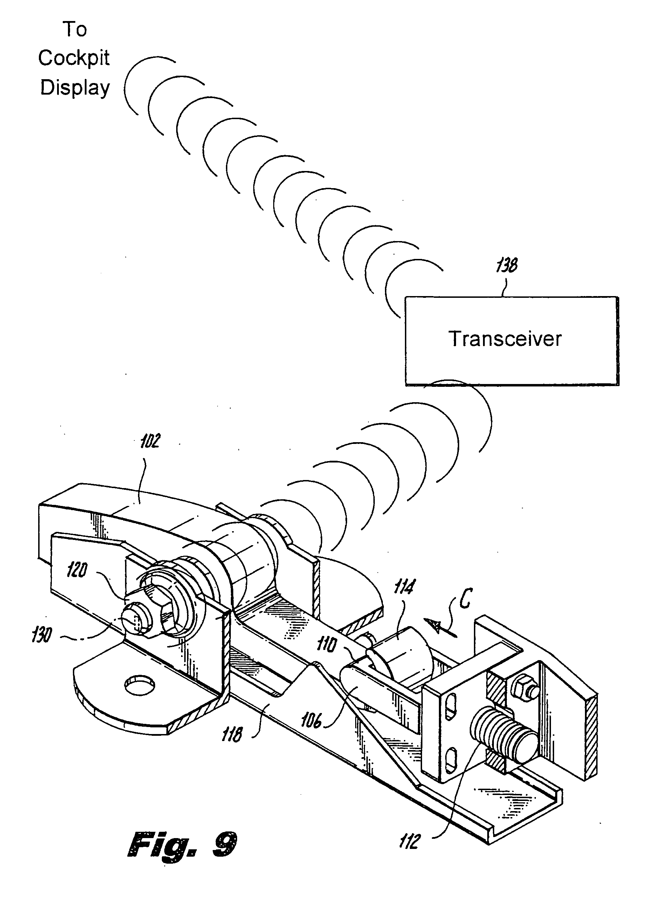

Referring to Fig. 9, a perspective view of the latch assembly, showing transmission of the signal to a remotely located transceiver 138 and forwarded to airplane cockpit is shown. The force or load on the latch assembly 100 is shown by force arrow "c". In operation, the pin 120 may be activated upon receipt of a signal from the transceiver 138. The strain gauge 126 generates a signal indicative of the load between the latch 102 and keeper 106. The microcontroller 128 performs any necessary signal processing so that the signal is transmitted from the antenna 130 into a broadcast zone around the pin 120. The remotely located transceiver 138 is preferably mounted within the cowl doors 18, 20 and the broadcast zone to receive the signal.

If necessary, the transceiver 138 performs further processing of the signal such as boosting the signal, converting a raw signal into a reading of load and/or converting a load reading into a status indication of open or closed and the like. It is envisioned that the signal processing could be distributed in any practical arrangement between the microcontroller 128 and transceiver 138 or other subsequent components such as a computer in the cockpit or other area of the aircraft 10. Further, the transceiver 138 may be configured to process the signals from a plurality of latch assemblies 100. Similarly, if needed, multiple transceivers could be used to process and boost the signals from a single pin 120.

In one embodiment, the transceiver 138 has a Wheatstone bridge measuring circuit (not shown) with various calibration and tuning resistors. Thus, the transceiver 138 can process the pin signal, convert the signal into a reading of the load and provide an indication of whether of not the latch is closed. The transceiver 138 may have various lights to indicate open, closed or within an acceptable predetermined range. The transceiver 138 may also have an analog readout, and/or a digital readout along with on/off, and a mode selection switch. The transceiver 138 also passes the signal along, either wired or wirelessly, to another portion of the aircraft 10 so that the pilot and/or ground crew has an indication of the latch assembly status or even a numeric reading of the load. In one embodiment, the transceiver 138 is mounted on the engine fan case and hard wired to the aircraft or engine control electronics.

The pin 120 in the latch assembly 100 bears a large load (e.g., 400 to 800 lbs [180-360 kg]) when the latch assembly 100 is closed and a small load (e.g., 3 lbs [1.4 kg]) when the latch assembly 100 is open. Consequently, the signal indicative of the load on the pin 120 can be wirelessly transmitted so that a pilot or mechanic, at a location remote from the pin 120, can be aware of the status of the latch assembly 100. Hence, by utilizing a pin 120 in each latch assembly 100, the latch assemblies 100 can be effectively polled prior to take off to make sure each latch assembly 100 is closed. During flight, the latch assemblies 100 bear an even larger load (e.g., 4,000 to 18,000 lbs [1.8 - 8.1 t]) and the pin 120 and other components are designed robustly to withstand the in-flight loading. As noted above, the active components of the pin 120 may be switched off during flight, e.g., to conserve battery strength.

The microcontroller 128 and/or the transceiver 138 may function together or separately to provide various modes of operation for the pin 120. The pin 120 may have a maintenance mode as described below or intermittent modes of operation. For example, the load signal may be transmitted when the engine 12 is not operational and the microcontroller 128 has been prompted into activation by receipt of an input signal. The pin 120 may also run according to a schedule protocol (e.g., once every two minutes), reporting on request (e.g., on demand from a base station or control area), or reporting on change (e.g., when the latch 102 is opened or closed).

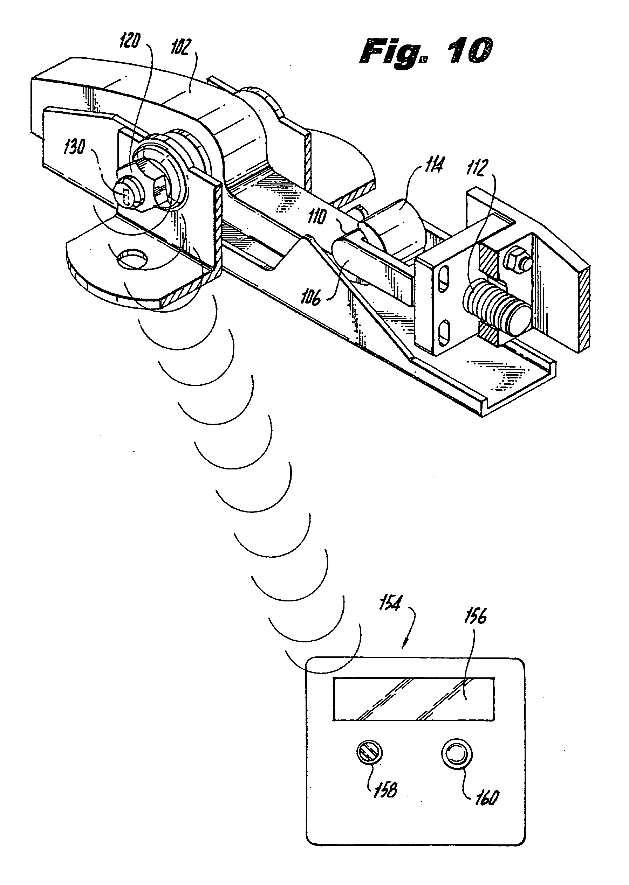

Referring now to Fig. 10, it may be beneficial to monitor and adjust the preloading of the latch assemblies 100 during engine build up or aircraft maintenance. By having the latch assemblies 100 apply the proper closing force to the cowl doors 18, 20, chafing and undue wear is prevented. Typically, the latch pre-load force has been measured by using a force gauge to measure the force required to close the latch 102, which is an indirect measurement of the operational force between the latch 102 and keeper 106. By using the pin 120, a mechanic can acquire a direct measurement because the pin 120 actually may carry the load between the latch 102 and keeper 106.

In one embodiment, the mechanic uses a separate mechanics transceiver 154 that provides additional functionality to the transceiver 138 mounted on the engine fan case. The mechanic can use the pin 120 and mechanics transceiver 154 to generate a signal indicative of the load and determine if the load is appropriate based on the signal (e.g., 500 lbs plus or minus 50 lbs [227 ± 22.7 kg]). When the pre-load is inappropriate, the mechanic can adjust the position of the keeper 106 by rotating the threaded bar 1 12. As a result, the pre-load on the latch assembly 100 can be adjusted until the pre-load is within tolerance. The mechanics transceiver 154 shown has a digital display 156, an on/off button 158 and an indicator light 162.

Common airline design parameters are to incorporate additional robustness into mechanical designs. Often, a structural component is 5 or even 10 times as capable of carrying the respective working load because of the potentially catastrophic consequences of failure. As a result, many components are bulkier and heavier than is desirable. By applying the subject technology, it can be seen that monitoring of the current and accumulated strain can allow prediction of component fatigue. By predicting when a component may become likely to fail, replacement and repair can be accomplished prior to failure. As a result, the excessive mechanical robustness requirements may be loosened to allow for more compact and lighter assemblies. Additionally, if the mechanism has a secondary fail safe load path, having the subject technology in the primary load path will immediately identify a failure, e.g., an indication that the secondary fail safe device has taken over. As a result, the secondary device will not need to be designed to function between maintenance intervals. Rather, the design of the secondary fail safe device can be designed to function over shorter intervals.

While the invention has been described above with one antenna paired with one receiver, those skilled in the art will appreciate that it is also possible to use multiple antennae with a single receiver and vice versa without departing from the scope of the invention. Implementation of the subject technology also has benefits from a security standpoint, in addition to the other advantages discussed above. For example, after the cowl doors are properly closed and locked, continued remote monitoring of the transmitted load signal (by personnel either on board the aircraft or remote from the aircraft), up until the time the aircraft takes off from the runway, can provide an indication if the door has been tampered with or otherwise improperly opened. If any such tampering or opening has taken place, take-off can be delayed, and the aircraft can promptly be inspected and the cause appropriately addressed.

## Claims

1. A cowl assembly for an engine nacelle comprising:
a) a first (18) and second cowl door (20) mounted for movement between an open position and a closed position;
b) a latch assembly (100) for selectively retaining the cowl doors in the closed position, the latch assembly having a latch (102) retained in a latch housing (104) on the first cowl door to engage a keeper (106) retained in a keeper housing (108) on the second cowl door;
c) a pin (120) including an internal bore (124) and associated with one of the keeper, the keeper housing, the latch and the latch housing, wherein the pin carries at least a portion of the load on the latch;
d) a microcontroller (128) and a sensor (126) retained in the internal bore of the pin for determining a signal indicative of a load on the pin, wherein the signal is determinative of whether the cowl doors are in the open or closed position; and
e) an antenna (130) for receiving and transmitting the signal to a location remote from the sensor.

2. A cowl assembly as recited in claim 1, further comprising a power source (132) configured and adapted to be retained in the internal bore,

3. A cowl assembly as recited in claim 1, wherein the pin retains one of the latch and the keeper to the respective housing, and/or the pin retains one of the housings to the respective cowl door.

4. A cowl assembly as recited in claim 1, wherein the pin is selected from the group consisting of a bolt, a partially threaded bolt, a threaded bolt with a non-threaded portion of varying diameter, a bolt with a cotter pin, a headless bolt, and variations thereof.

5. A cowl assembly as recited in claim 1, further comprising: a transceiver (138) for receiving the signal at the remote location; and a cap (134) for enclosing the internal bore and shaping broadcast of the signal.

6. A cowl assembly as recited in claim 1, wherein pin is fixed in an orientation and has a narrow portion with the sensor being bonded within the internal bore at the narrow portion.

7. A wireless latch detection system for determining when the latch for securing an engine cowl of an aircraft engine is secured, the wireless latch detection system comprising the cowl assembly as recited in claim 1 and a transceiver remotely located from the pin for processing the signal from the antenna.

8. A wireless latch detection system as recited in claim 7, further comprising a power source for powering the pin.

9. A wireless latch detection system as recited in claim 7, wherein the transceiver records and stores the signal.

10. A wireless latch detection system as recited in claim 7, wherein the wireless latch detection system is inactive when the aircraft engine is active.

11. A method for determining when the latch assembly of the cowl assembly of claim 1 is open or secure comprising the steps of:
a) providing the pin (120) in the latch assembly such that the pin bears a first load when the latch is secure and a second load when the latch is open;
b) generating a signal indicative of the load on the pin and
c) wirelessly transmitting the signal to a location remote from the in and
d) determining if the load is within an acceptable predetermined range based on the signal.

12. A method as recited in claim 11, further comprising the step of converting the signal into status information regarding the open or secure state of the latch assembly, wherein the first load is greater than the second load.

13. A method as recited in claim 11, wherein the pin is selected from the group consisting of a pin and a bolt.

14. A method for verifying a pre-load of the latch assembly of the cowl assembly of claim 1 comprising the steps of:
a) providing the pin in the latch assembly such that the pin bears a load when the latch is secure;
b) using the pin to generate a signal indicative of the load; and
c) determining If the load is appropriate based on the signal.

15. A method as recited in claim 14, further comprising the step of adjusting the load and repeating steps b) and c) when the load is inappropriate.

16. A method as recited in claim 14, further comprising the step of retaining a latch to the latch assembly with the pin, and/or the step of transmitting the signal either wirelessly or through a wired connection.

17. A method as recited in Claim 14, wherein the load is adjusted by positioning a keeper that engages a latch and the pin is fixed in place.

18. A method as recited in claim 14, wherein the pin includes:
i) a body defining a bore;
ii) at least one strain gauge bonded to the body inside the bore;
iii) a battery for powering the pin;
iv) an antenna for transmitting the signal; and
v) a microcontroller
operatively connected to the at least one strain gauge, the battery and the antenna.

19. A method as recited in claim 14, further comprising the steps of monitoring accumulation of the load and determining if the latch assembly should be replaced based upon the accumulation of the load, and/or further comprising the steps of monitoring the load and determining if the latch assembly has been inappropriately opened, and/or further comprising the steps of monitoring the load and determining if a secondary fail safe latch assembly is alternatively being used.

## Patentansprüche

1. Verkleidungsbaugruppe für eine Triebwerksgondel, umfassend:
a) eine erste (18) und zweite Verkleidungsklappe (20), die zur Bewegung zwischen einer offenen Stellung und einer geschlossenen Stellung angebracht ist;
b) eine Verriegelungsbaugruppe (100) zum selektiven Halten der Verkleidungsklappen in der geschlossenen Stellung, wobei die Verriegelungsbaugruppe einen Riegel (102) aufweist, der in einem Riegelgehäuse (104) an der ersten Verkleidungsklappe gehalten wird, um in Eingriff mit einem Schließhaken (106) zu treten, der in einem Schließhakengehäuse (108) an der zweiten Verkleidungsklappe gehalten wird;
c) einen Stift (120) mit einer Innenbohrung (124), der einem von dem Schließhaken, dem Schließhakengehäuse, dem Riegel und dem Riegelgehäuse zugeordnet ist, wobei der Stift wenigstens einen Teil der Last auf dem Riegel trägt;
d) einen Mikrocontroller (128) und einen Sensor (126), die in der Innenbohrung des Stifts gehalten werden, um ein Signal zu bestimmen, das eine Last auf dem Stift angibt, wobei das Signal bestimmt, ob die Verkleidungsklappen in der offenen oder geschlossenen Stellung sind; und
e) eine Antenne (130) zum Empfangen und Senden des Signals an eine Position entfernt von dem Sensor.

2. Verkleidungsbaugruppe nach Anspruch 1, ferner umfassend eine Stromquelle (132), die dazu konfiguriert und angepasst ist, in der Innenbohrung gehalten zu werden.

3. Verkleidungsbaugruppe nach Anspruch 1, wobei der Stift einen von dem Riegel und dem Schließhaken im jeweiligen Gehäuse hält und/oder der Stift eins der Gehäuse an der jeweiligen Verkleidungsklappe hält.

4. Verkleidungsbaugruppe nach Anspruch 1, wobei der Stift aus der Gruppe ausgewählt ist bestehend aus einem Bolzen, einem Teilgewindebolzen, einem Gewindebolzen mit einem gewindelosen Abschnitt mit variierendem Durchmesser, einem Bolzen mit einem Splint, einem Bolzen ohne Kopf und Variationen derselben.

5. Verkleidungsbaugruppe nach Anspruch 1, ferner umfassend: einen Sendeempfänger (138) zum Empfangen des Signals an der entfernten Position; und eine Kappe (134) zum Einschließen der Innenbohrung und Formen der Übertragung des Signals.

6. Verkleidungsbaugruppe nach Anspruch 1, wobei der Stift in einer Orientierung fixiert ist und einen schmalen Abschnitt aufweist, wobei der Sensor innerhalb der Innenbohrung mit dem schmalen Abschnitt verbunden ist.

7. Drahtloses Riegelerkennungssystem, um zu bestimmen, wann der Riegel zum Sichern einer Triebwerksverkleidung eines Flugzeugtriebwerks gesichert ist, wobei das drahtlose Riegelerkennungssystem die Verkleidungsbaugruppe nach Anspruch 1 und einen Sendeempfänger umfasst, der entfernt von dem Stift angeordnet ist, um das Signal von der Antenne zu verarbeiten.

8. Drahtloses Riegelerkennungssystem nach Anspruch 7, ferner umfassend eine Stromquelle zum Versorgen des Stifts mit Strom.

9. Drahtloses Riegelerkennungssystem nach Anspruch 7, wobei der Sendeempfänger das Signal aufzeichnet und speichert.

10. Drahtloses Riegelerkennungssystem nach Anspruch 7, wobei das drahtlose Riegelerkennungssystem inaktiv ist, wenn das Flugzeugtriebwerk aktiv ist.

11. Verfahren zum Bestimmen, ob die Riegelbaugruppe der Verkleidungsbaugruppe nach Anspruch 1 offen oder sicher ist, folgende Schritte umfassend:
a) Bereitstellen des Stifts (120) in der Riegelbaugruppe, derart, dass der Stift eine erste Last trägt, wenn der Riegel sicher ist, und eine zweite Last, wenn der Riegel offen ist;
b) Erzeugen eines Signals, das die Last auf dem Stift angibt; und
c) drahtloses Senden des Signals an eine Position entfernt von dem Stift; und
d) Bestimmen auf Grundlage des Signals, ob die Last innerhalb eines akzeptablen vorgegebenen Bereichs ist.

12. Verfahren nach Anspruch 11, ferner umfassend den Schritt des Umwandeins des Signals in Statusinformationen zum offenen oder sicheren Zustand der Riegelbaugruppe, wobei die erste Last größer als die zweite Last ist.

13. Verfahren nach Anspruch 11, wobei der Stift ausgewählt ist aus der Gruppe bestehend aus einem Stift und einem Bolzen.

14. Verfahren zum Verifizieren einer Vorspannung der Riegelbaugruppe der Verkleidungsbaugruppe nach Anspruch 1, folgende Schritte umfassend:
a) Bereitstellen des Stifts in der Riegelbaugruppe, derart, dass der Stift eine Last trägt, wenn der Riegel sicher ist;
b) Verwenden des Stifts, um ein Signal zu erzeugen, das die Last angibt; und
c) Bestimmen auf Grundlage des Signals, ob die Last angemessen ist.

15. Verfahren nach Anspruch 14, ferner umfassend den Schritt des Anpassens der Last und des Wiederholens der Schritte b) und c), wenn die Last nicht angemessen ist.

16. Verfahren nach Anspruch 14, ferner umfassend den Schritt des Haltens eines Riegels an der Riegelbaugruppe mit dem Stift, und/oder den Schritt des Sendens des Signals entweder drahtlos oder über eine drahtgebundene Verbindung.

17. Verfahren nach Anspruch 14, wobei die Last angepasst wird, indem ein Schließhaken positioniert wird, der in Eingriff mit einem Riegel tritt, und der Stift in seiner Position fixiert wird.

18. Verfahren nach Anspruch 14, wobei der Stift Folgendes aufweist:
i) einen Körper, der eine Bohrung definiert,
ii) wenigstens Dehnungsmesser, der im Inneren der Bohrung mit dem Körper verbunden ist;
iii) eine Batterie, um den Stift mit Strom zu versorgen;
iv) eine Antenne zum Übertragen des Signals; und
v) einen Mikrocontroller, der in Wirkbeziehung mit dem wenigstens einen Dehnungsmesser, der Batterie und der Antenne verbunden ist.

19. Verfahren nach Anspruch 14, ferner umfassend die Schritte des Überwachens einer Akkumulation der Last und des Bestimmens auf Grundlage der Akkumulation der Last, ob die Riegelbaugruppe ersetzt werden sollte, und/oder ferner umfassend die Schritte des Überwachens der Last und des Bestimmens, ob die Riegelbaugruppe unangemessen geöffnet wurde, und/oder ferner umfassend die Schritte des Überwachens der Last und des Bestimmens, ob alternativ eine sekundäre Ausfallschutzriegelbaugruppe benutzt wird.

## Revendications

1. Ensemble de capot pour une nacelle de moteur comprenant .
a) une première (18) et une seconde porte de capot (20) montées pour un mouvement entre une position ouverte et une position fermée ;
b) un dispositif de verrouillage (100) pour retenir de manière sélective les portes de capot en position fermée, le dispositif de verrouillage comportant un verrou (102) retenu dans un boîtier de verrou (104) sur la première porte de capot pour entrer en prise avec une gâche (106) retenue dans un boîtier de gâche (108) sur la seconde porte de capot ;
c) une broche (120) comprenant un alésage interne (124) et associée à l'un de la gâche, du boîtier de gâche, du verrou et du boîtier de verrou, dans lequel la broche porte au moins une partie de la charge sur le verrou ;
d) un microcontrôleur (128) et un capteur (126) retenus dans l'alésage interne de la broche pour déterminer un signal indicateur d'une charge sur la broche, dans lequel le signal est déterminant quant à savoir si les portes de capot sont en position ouverte ou fermée ; et
e) une antenne (130) pour recevoir et transmettre le signal à un emplacement distant du capteur.

2. Ensemble de capot selon la revendication 1, comprenant en outre une source d'alimentation (132) configurée et adaptée pour être retenue dans l'alésage interne.

3. Ensemble de capot selon la revendication 1, dans lequel la broche retient un du verrou et de la gâche sur le boîtier respectif, et/ou la broche retient l'un des boîtiers à la porte de capot respective.

4. Ensemble de capot selon la revendication 1, dans lequel la broche est sélectionnée dans le groupe constitué d'un boulon, d'un boulon partiellement fileté, d'un boulon fileté avec une partie non filetée de diamètre variable, d'un boulon avec une goupille, d'un boulon sans tête, et de variantes de ceux-ci.

5. Ensemble de capot selon la revendication 1, comprenant en outre : un émetteur-récepteur (138) pour recevoir le signal à l'emplacement distant ; et un capuchon (134) pour enfermer l'alésage interne et mettre en forme la diffusion du signal.

6. Ensemble de capot selon la revendication 1, dans lequel la broche est fixée dans une orientation et comporte une partie étroite avec le capteur étant lié à l'intérieur de l'alésage interne au niveau de la partie étroite.

7. Système de détection de verrouillage sans fil pour déterminer quand le verrou pour fixer un capot de moteur d'un moteur d'aéronef est fixé, le système de détection de verrouillage sans fil comprenant l'ensemble de capot selon la revendication 1 et un émetteur-récepteur situé à distance de la broche pour traiter le signal de l'antenne.

8. Système de détection de verrouillage sans fil selon la revendication 7, comprenant en outre une source d'énergie pour alimenter la broche.

9. Système de verrouillage sans fil de détection selon la revendication 7, dans lequel l'émetteur-récepteur enregistre et stocke le signal.

10. Système de détection de verrouillage sans fil selon la revendication 7, dans lequel le système de détection sans fil de verrouillage est inactif lorsque le moteur de l'aéronef est actif.

11. Procédé pour déterminer le moment où le dispositif de verrouillage de l'ensemble de capot de la revendication 1 est ouvert ou fermé, comprenant les étapes consistant à :
a) amener la broche (120) dans le dispositif de verrouillage de telle sorte que la broche porte une première charge lorsque le verrou est bloqué et une seconde charge lorsque le verrou est ouvert ;
b) générer un signal indicateur de la charge sur la broche et
c) transmettre sans fil le signal à un emplacement distant de la broche, et
d) déterminer si la charge est dans une plage acceptable prédéterminée sur la base du signal.

12. Procédé selon la revendication 11, comprenant en outre l'étape consistant à convertir le signal en une information d'état relative à l'état ouvert ou fermé du dispositif de verrouillage, dans lequel la première charge est supérieure à la seconde charge.

13. Procédé selon la revendication 11, dans lequel la broche est sélectionnée dans le groupe constitué d'une broche et d'un boulon.

14. Procédé de vérification d'une précharge du dispositif de verrouillage de l'ensemble de capot selon la revendication 1, comprenant les étapes consistant à :
a) amener la broche dans le dispositif de verrouillage de telle sorte que la broche supporte une charge lorsque le verrou est sécurisé ;
b) utiliser la broche pour produire un signal indicateur de la charge ; et
c) déterminer si la charge est appropriée en fonction du signal.

15. Procédé selon la revendication 14, comprenant en outre l'étape consistant à ajuster la charge et à répéter les étapes b) et c) lorsque la charge est inappropriée.

16. Procédé selon la revendication 14, comprenant en outre l'étape consistant à retenir un verrou du dispositif de verrouillage avec la broche, et/ou l'étape consistant à transmettre le signal sans fil ou via une connexion filaire.

17. Procédé selon la revendication 14, dans lequel la charge est ajustée en positionnant une gâche qui pénètre dans un verrou et la broche est fixée en place.

18. Procédé selon la revendication 14, dans lequel la broche comprend :
i) un corps définissant un alésage ;
ii) au moins une jauge de contrainte collée au corps à l'intérieur de l'alésage ;
iii) une batterie pour alimenter la broche ;
iv) une antenne pour transmettre le signal ; et
v) un microcontrôleur
en liaison active avec au moins un d'un tensiomètre, de la batterie et de l'antenne.

19. Procédé selon la revendication 14, comprenant en outre les étapes consistant à surveiller l'accumulation de la charge et à déterminer si le dispositif de verrouillage doit être remplacé en fonction de l'accumulation de la charge, et/ou comprenant en outre les étapes consistant à surveiller la charge et à déterminer si le dispositif de verrouillage est ouvert de façon inapproprié, et/ou comprenant en outre les étapes consistant à surveiller la charge et à déterminer si un dispositif de verrouillage secondaire de sécurité est utilisé en variante.
